(19) Europäisches Patentamt
European Patent Office
Office européen des brevets

(11) Veröffentlichungsnummer: **0 315 006 B1**

(12) # EUROPÄISCHE PATENTSCHRIFT

(45) Veröffentlichungstag der Patentschrift: **30.12.92**

(51) Int. Cl.$^5$: **C08G 18/38**, C08G 18/10, C08G 18/83

(21) Anmeldenummer: **88117664.8**

(22) Anmeldetag: **24.10.88**

Die Akte enthält technische Angaben, die nach dem Eingang der Anmeldung eingereicht wurden und die nicht in dieser Patentschrift enthalten sind.

(54) **Wässrige Lösungen oder Dispersionen von Polyurethanen, ein Verfahren zu ihrer Herstellung und ihre Verwendung als Beschichtungsmittel oder zur Herstellung von Beschichtungsmitteln.**

(30) Priorität: **03.11.87 DE 3737245**

(43) Veröffentlichungstag der Anmeldung:
**10.05.89 Patentblatt 89/19**

(45) Bekanntmachung des Hinweises auf die Patenterteilung:
**30.12.92 Patentblatt 92/53**

(84) Benannte Vertragsstaaten:
**AT BE CH DE ES FR GB IT LI NL**

(56) Entgegenhaltungen:
**EP-A- 0 163 214**
**US-A- 3 983 291**
**US-A- 4 628 076**

(73) Patentinhaber: **BAYER AG**

**W-5090 Leverkusen 1 Bayerwerk(DE)**

(72) Erfinder: **Franke, Joachim, Dr.**
**An der Ruthen 2**
**W-5000 Köln 80(DE)**
Erfinder: **Müller, Hanns Peter, Dr.**
**Weizenfeld 36**
**W-5060 Bergisch Gladbach 2(DE)**

EP 0 315 006 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue, lagerstabile, zu vernetzten Filmen auftrocknende wäßrige Lösungen oder Dispersionen von Alkoxysilan-Gruppen aufweisenden Polyurethanen, ein Verfahren zu ihrer Herstellung und ihre Verwendung als Beschichtungsmittel oder zur Herstellung von Beschichtungsmitteln für beliebige Substrate.

Alkoxysilangruppen aufweisende Polyurethane wurden in Form ihrer organischen Lösungen bereits zur Herstellung von feuchtigkeitshärtenden Beschichtungen eingesetzt (vgl. z.B. EP-A-158 893 oder US-PS 4 222 925). Ein großer Nachteil dieser Systeme besteht in der Verwendung von organischen Lösungsmitteln mit den damit verbundenen Folgen wie Umweltbelastung, Brennbarkeit und Geruch. Ein weiterer Nachteil liegt in der Empfindlichkeit dieser Lösungen gegen Feuchtigkeit. Selbst geringe Spuren Wasser können zu einer sofortigen Vernetzung oder Gelierung führen, so daß diese Lösungen nicht mehr brauchbar sind.

Trotz der hohen Empfindlichkeit der Alkoxysilangruppen gegenüber Spuren von Wasser hat es nicht an Versuchen gefehlt, Alkoxysilangruppen aufweisende Polyurethane in Form von wäßrigen Lösungen oder Dispersionen herzustellen, um diese wäßrigen Lösungen oder Dispersionen als umweltfreundliche Beschichtungsmittel einsetzen zu können. So beschreibt beispielsweise die EP-A-163 214 wäßrige Dispersionen von Organosilan-Gruppen aufweisenden Polyurethanen, jedoch wird in dieser Vorveröffentlichung hervorgehoben, daß bei einer "Silyl-Konzentration" im Polymeren von höher als 0,1 Gew.-% die Gefahr eines frühzeitigen Gelierens besteht, der dadurch begegnet wird, daß man den pH-Wert der Dispersion bei oberhalb 7 hält. Einerseits ist eine so geringe Konzentration an vernetzungsfähigen Zentren kaum dazu geeignet, die zur Herstellung von hochwertigen Flächengebilden unverzichtbare hohe Vernetzungsdichte zu gewährleisten, und andererseits hat die in der Vorveröffentlichung empfohlene Einstellung des pH-Werts auf Werte von über 7 offensichtlich zur Folge, daß die beschriebenen Dispersionen nicht zur Herstellung von spontan bei Raumtemperatur aushärtenden Beschichtungen geeignet sind.

Die Offenbarung der US-PS 3 983 291 und insbesondere der US-PS 3 941 733 bestätigt diese Lehre des Standes der Technik. So wird beispielsweise in US-PS 3 941 733 ausgeführt, daß die höchste Stabilität der Verbindungen innerhalb des pH-Wert-Bereichs von 6,5 bis 9 liegt, und daß die Aushärtung der aus den Dispersionen hergestellten Flächengebilde vorzugsweise unter Einbrennbedingungen stattfindet. Offensichtlich wegen der auch von den Autoren der US-PS 3 941 733 erkannten Stabilitätsprobleme wird in den in den Ausführungsbeispielen konkret beschriebenen Polymeren der Gehalt an vernetzungsfähigen Siloxangruppen sehr niedrig gehalten. Ein niedriger Gehalt an diesen Gruppierungen führt, wie bereits ausgeführt, einerseits zu einer geringen Vernetzungsdichte und erfordert andererseits ebenfalls ein Einbrennen der Beschichtungen, um mittels der in geringer Konzentration vorliegenden vernetzungsfähigen Gruppen überhaupt zu einer nennenswerten Vernetzung zu kommen.

Es war die der Erfindung zugrundeliegende Aufgabe, neue Lösungen oder Dispersionen von vernetzungsfähige Alkoxysilangruppen aufweisenden Polyurethanen zur Verfügung zu stellen, die nicht mit den genannten Nachteilen der Systeme des Standes der Technik behaftet sind. Die neuen Lösungen bzw. Dispersionen sollten insbesondere eine einwandfreie Lagerstabilität und die gelöst bzw. dispergiert vorliegenden Polyurethane eine hohe Konzentration an vernetzungsfähigen Alkoxysilangruppen aufweisen, so daß aus den Lösungen bzw. Dispersionen hochwertige, bereits bei Raumtemperatur vernetzende Flächengebilde hergestellt werden können.

Diese Aufgabe konnte überraschend durch Bereitstellung der nachstehend näher beschriebenen erfindungsgemäßen Lösungen oder Dispersionen bzw. des Verfahrens zu ihrer Herstellung gelöst werden. Die erfindungsgemäßen Lösungen bzw. Dispersionen weisen, entgegen der Lehre des oben zitierten Standes der Technik, bei einem hohen Gehalt an vernetzungsfähigen Alkoxysilangruppen innerhalb des pH-Wert-Bereichs von 3 bis 6,5 eine sehr gute Lagerstabilität auf und gestatten außerdem die Herstellung von hochwertigen, bereits bei Raumtemperatur aushärtenden Beschichtungen.

Gegenstand der Erfindung sind wäßrige Lösungen oder Dispersionen von kationisch modifizierten Polyurethanen, die dadurch gekennzeichnet sind, daß die gelöst oder dispergiert vorliegenden Polyurethane

(i) einen Gehalt an eingebauten Ammoniumgruppen von 2 bis 200 Milliäquivalenten pro 100 g Feststoff,

(ii) einen Gehalt an, innerhalb von end- oder seitenständig angeordneten Polyetherketten vorliegenden Ethylenoxideinheiten von 0 bis 25 Gew.-%,

(iii) einen Gehalt an eingebauten Struktureinheiten der Formel

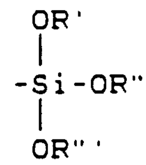

berechnet als $SiO_3$ (Molekulargewicht = 76) von mindestens 1,3 Gew.-%
aufweisen, wobei in der allgemeinen Formel R', R'' und R''' für gleiche oder verschiedene Reste stehen und Wasserstoff oder Alkylgruppen mit 1 bis 4 Kohlenstoffatomen bedeuten, und wobei die hydrophilen Struktureinheiten (i) und (ii) insgesamt in einer, die Löslichkeit oder Dispergierbarkeit der Polyurethane in Wasser gewährleistenden Menge vorliegen, und die Lösungen oder Dispersionen einen pH-Wert von 3 bis 6 aufweisen.

Gegenstand der Erfindung ist auch ein Verfahren zur Herstellung dieser Lösungen oder Dispersionen durch Umsetzung von

a) organischen Polyisocyanaten mit

b) organischen Polyhydroxylverbindungen des Molekulargewichtsbereichs 400 bis 6000,

c) tertiäre Aminstickstoffatome aufweisenden Verbindungen mit mindestens einer gegenüber Isocyanatgruppen reaktionsfähigen Gruppe,

d) organischen Verbindungen der allgemeinen Formel

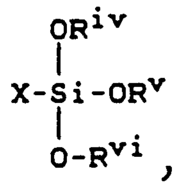

in welcher

X für einen organischen Rest steht, der mindestens eine gegenüber Isocyanatgruppen reaktionsfähige Gruppe trägt und

$R^{iv}$, $R^{v}$ und $R^{vi}$ für gleiche oder verschiedene Alkylreste mit 1 bis 4 Kohlenstoffatomen stehen,

gegebenenfalls

e) im Sinne der Isocyanat-Additionsreaktion ein- oder difunktionellen Verbindungen, die eine hydrophile Polyetherkette aufweisen, deren Kettenglieder zumindest zu 40 Mol-% aus Ethylenoxid-Einheiten und zum Rest aus Propylenoxid-Einheiten bestehen,

und gegebenenfalls

f) alkoholischen, aminischen und/oder hydrazinischen Kettenverlängerungsmitteln des Molekulargewichtsbereichs 32 bis 399,

wobei die Umsetzung der Komponente a) mit den Komponenten b) bis f) im Sinne eines Einstufen-Verfahrens, gegebenenfalls unter Zuhilfenahme eines inerten, mit Wasser mischbaren Lösungsmittels unter anschließender Überführung des gelöst vorliegenden Polyurethans in eine wäßrige Lösung oder Dispersion erfolgt, oder wobei zunächst aus einer überschüssigen Menge der Komponente a) und den in beliebiger Reihenfolge oder im Gemisch eingesetzten Komponenten b), c), d) und gegebenenfalls e) gegebenenfalls unter Zuhilfenahme eines inerten, mit Wasser mischbaren Lösungsmittels ein NCO-Prepolymer hergestellt wird, welches anschließend durch Vermischen mit, gegebenenfalls aminische oder hydrazinische Kettenverlängerungsmittel f) enthaltendem Wasser unter gleichzeitiger Kettenverlängerung in eine wäßrige Lösung oder Dispersion überführt wird,
dadurch gekennzeichnet, daß man die eingebauten tertiären Stickstoffatome spätestens während des Lösens oder Dispergierens in Wasser mittels einer Säure neutralisiert, wobei die Menge der gegebenenfalls im Überschuß eingesetzten Säure so bemessen wird, daß die resultierende Lösung oder Dispersion einen pH-Wert von 3 bis 6 aufweist, und im übrigen Art und Mengenverhältnisse der Ausgangskomponenten so wählt, daß die gelöst oder dispergiert vorliegenden Polyurethane

(i) einen Gehalt an eingebauten Ammoniumgruppen von 2 bis 200 Milliäquivalenten pro 100 g Feststoff,

(ii) einen Gehalt an, innerhalb von end- oder seitenständig angeordneten Polyetherketten vorliegenden

Ethylenoxideinheiten von 0 bis 25 Gew.-%,
(iii) einen Gehalt an eingebauten Struktureinheiten der Formel

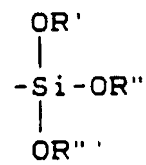

berechnet als $SiO_3$ (Molekulargewicht = 76) von mindestens 1,3 Gew.-%
aufweisen.

Gegenstand der Erfindung ist auch die Verwendung der Lösungen oder Dispersionen als Beschichtungsmittel oder zur Herstellung von Beschichtungsmitteln für beliebige Substrate.

Geeignete Polyisocyanate a) sind beliebige organische Verbindungen, die mindestens zwei freie Isocyanatgruppen aufweisen. Vorzugsweise werden Diisocyanate $Q(NCO)_2$ eingesetzt, wobei Q einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet.

Beispiele derartiger bevorzugt einzusetzender Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methylcyclohexan, 4,4'-Diisocyanato-dicyclohexylmethyl, 4,4'-Diisocyanato-dicyclohexylpropan-(2,2), 1,4-Diisocyanato-benzol, 2,4-Diisocyanato-toluol, 2,6-Diisocyanato-toluol, 4,4'-Diisocyanato-diphenylmethan, p-Xylylendiisocyanat, sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Für das erfindungsgemäße Verfahren geeignete Ausgangsmaterialien b) sind beliebige Polyether-, Polyester-, Polyetherester-, Polycarbonat- oder Polyacrylatpolyole des Molekulargewichtsbereichs 400 bis 6000, vorzugsweise 500 bis 3000 der aus der Polyurethanchemie an sich bekannten Art. Beliebige Gemische derartiger Polyhydroxylverbindungen können ebenfalls verwendet werden. Vorzugsweise werden als Komponente b) Polyetherpolyole oder Polyesterpolyole des genannten Molekulargewichtsbereichs eingesetzt, die (im statistischen Mittel) 2 bis 3 alkoholische Hydroxylgruppen aufweisen. Die Herstellung dieser Ausgangsmaterialien gehört zum bekannten Stand der Technik und ist beispielsweise in Kunststoff-Handbuch, Band VII, "Polyurethane", Carl Hanser Verlag München (1966) Seiten 45 ff. beschrieben.

Als Aufbaukomponenten c) eignen sich beliebige hydroxy- und/oder aminofunktionelle mono- und insbesondere bifunktionelle Verbindungen des Molekulargewichtsbereichs 88 bis 1000, vorzugsweise 89 bis 300 mit tertiären Aminstickstoffatomen, deren tertiäre Stickstoffatome während oder nach Beendigung der Isocyanat-Polyadditionsreaktion durch Neutralisierung oder Quaternisierung zumindest teilweise in tertiäre bzw. quartäre Ammoniumgruppen überführt werden können. Hierzu gehören beispielsweise Verbindungen wie 2-(N,N-Dimethylamino)-ethylamin, N-Methyl-diethanolamin, N-Methyl-diisopropanolamin, N-Ethyl-diethanolamin, N-Ethyl-diisopropanolamin oder N,N'-Bis-(2-hydroxyethyl)-perhydropyrazin, N-Methyl-bis(3-aminopropyl)-amin, N-Methyl-bis(2-aminoethyl)-amin oder N,N',N''-Trimethyl-diethylentriamin, N,N-Dimethylaminoethanol, N,N-Diethylaminoethanol, 1-N,N-Diethylamino-2-aminoethan, 1-N,N-Diethylamino-3-aminopropan.

Bei den erfindungsgemäß einzusetzenden Ausgangskomponenten d) handelt es sich um beliebige Verbindungen der allgemeinen Formel

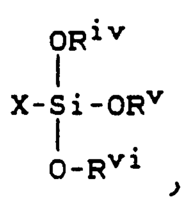

in welcher

$R^{iv}$, $R^{v}$ und $R^{vi}$ für gleiche oder verschiedene Alkylreste mit 1 bis 4 Kohlenstoffatomen, vorzugsweise für Methyl- oder Ethylreste stehen und

X für einen organischen Rest steht, der mindestens eine gegenüber Isocyanatgruppen reaktionsfähige Gruppe, vorzugsweise eine Hydroxyl- oder primäre Aminogruppe als Substituenten aufweist.

Besonders gut geeignete derartige Verbindungen d) sind solche der zuletztgenannten allgemeinen Formel, für welche $R^{iv}$, $R^{v}$ und $R^{vi}$ für Methyl- oder Ethylreste stehen und X einen 2-Hydroxyethyl, 3-Hydroxypropyl, 2-(2-Hydroxyethoxy)-ethyl-, 2-(2-Aminoethylamino)-ethyl- oder 3-(3-Aminopropylamino)-propyl-Rest stehen.

Beispiele für geeignete bzw. bevorzugt geeignete Ausgangsmaterialien d) sind
$H_2N-(CH_2)_3-Si(O-CH_2-CH_3)_3$, $HO-CH(CH_3)-CH_2-Si(OCH_3)_3$,
$HO-(CH_2)_3-Si(O-CH_3)_3$, $HO-CH_2-CH_2-O-CH_2-CH_2-Si(OCH_3)_3$,
$(HO-C_2H_5)_2-N-(CH_2)_3-Si(O-CH_3)_3$,
$HO-(C_2H_4-O)_3-C_2H_4-N(CH_3)-(CH_2)_3-Si(O-C_4H_9)_3$,
$H_2N-CH_2-C_6H_4-CH_2-CH_2-Si(O-CH_3)_3$,
$HS-(CH_2)_3-Si(O-CH_3)_3$, $H_2N-(CH_2)_3-NH-(CH_2)_3-Si(OCH_3)_3$,
$H_2N-CH_2-CH_2-NH-(CH_2)_2-Si(O-CH_3)_3$,
$H_2N-(CH_2)_2-NH-(CH_2)_3-Si(OCH_3)_3$.

Bei den gegebenenfalls mitzuverwendenden Ausgangsmaterialien e) handelt es sich um eine oder zwei Hydroxylgruppen und eine Polyetherkette aufweisende organische Verbindungen des Molekulargewichtsbereichs 800 bis 10.000, vorzugsweise 1000 bis 5000, wobei im Falle der zweiwertigen Polyetheralkohole die Polyetherkette seitenständig angeordnet ist. Die Polyetherketten in diesen Verbindungen bestehen zumindest zu 40 Mol-%, vorzugsweise zumindest zu 65 Mol-% aus Ethylenoxideinheiten und zum Rest aus Propylenoxideinheiten.

Geeignete derartige Aufbaukomponenten e) sind beispielsweise die in US-PS 4 237 264, US-PS 4 092 286 oder US-PS 4 190 566 genannten Polyetherketten aufweisenden hydrophilen, Hydroxylgruppen aufweisenden Aufbaukomponenten.

Vorzugsweise handelt es sich bei der gegebenenfalls mitzuverwendenden Aufbaukomponente e) um einwertige Polyetheralkohole des genannten Molekulargewichtsbereichs, die durch Alkoxylierung von einwertigen Startermolekülen wie beispielsweise Methanol, Ethanol oder n-Butanol erhältlich sind, wobei als Alkoxylierungsmittel Ethylenoxid oder Gemische von Ethylenoxid mit Propylenoxid eingesetzt werden.

Bei den gegebenenfalls mitzuverwendenden Aufbaukomponenten f) handelt es sich entweder um organische, vorzugsweise 2- und/oder 3-wertige und insbesondere 2-wertige Polyhydroxylverbindungen des Molekulargewichtsbereichs 62 bis 399, vorzugsweise 62 bis 250, oder um aminische oder hydrazinische Kettenverlängerungsmittel bzw. Vernetzer des Molekulargewichtsbereichs 32 bis 399, vorzugsweise 60 bis 250.

Zu den erstgenannten Vertretern der Aufbaukomponente f) gehören beispielsweise einfache, mehrwertige Alkohole wie Ethylenglykol, Propylenglykol, Propandiol-(1,3), Butandiol-1,4, Hexandiol-1,6, Trimethylolpropan oder Glycerin. Auch niedermolekulare Polyesterdiole wie z.B. Adipinsäure-bis-(hydroxyethyl)-ester oder niedermolekulare, Ethergruppen aufweisende Diole wie z.B. Diethylenglykol, Triethylenglykol, Tetraethylenglykol, Dipropylenglykol, Tripropylenglykol oder Tetrapropylenglykol können als Aufbaukomponente e) mitverwendet werden.

Zu den letztgenannten Verbindungen gehören beispielsweise Ethylendiamin, Hexamethylendiamin, Piperazin, 2,5-Dimethylpiperazin, 1-Amino-3-aminomethyl-3,5,5-trimethyl-cyclohexan (Isophorondiamin, IPDA), 4,4'-Diamino-dicyclohexylmethan, 1,4-Diamino-cyclohexan, 1,2-Diamino-propan, Hydrazin, Hydrazinhydrat, Aminosäurehydrazide wie z.B. 2-Aminoessigsäure-hydrazid oder Bis-hydrazide wie z.B. Bernsteinsäure-bis-hydrazid.

Insbesondere die aminischen bzw. hydrazinischen Kettenverlängerungsmittel, die keinen tert. Stickstoff aufweisen, können beim erfindungsgemäßen Verfahren auch in blockierter Form, d.h. in Form der entsprechenden Ketimine (DE-AS 2 725 589), Ketazine (DE-OS 2 811 148, US-PS 4 269 748) oder Aminsalze (US-PS 4 292 226) zum Einsatz gelangen. Auch Oxazolidine, wie sie beispielsweise gemäß DE-OS 2 732 131 bzw. US-PS 4 192 937 zum Einsatz gelangen, stellen verkappte Diamine dar, die beim erfindungsgemäßen Verfahren in Analogie zu den genannten Vorveröffentlichungen zur Kettenverlängerung der NCO-Prepolymeren eingesetzt werden können. Bei der Verwendung derartiger verkappter Diamine werden diese im allgemeinen mit den NCO-Prepolymeren in Abwesenheit von Wasser vermischt und diese Mischung anschließend mit dem Dispersionswasser oder einem Teil des Dispersionswassers vermischt, so daß intermediär hydrolytisch die entsprechenden Diamine freigesetzt werden.

Weitere Vertreter von beim erfindungsgemäßen Verfahren als Aufbaukomponenten f) einzusetzenden

Verbindungen sind z.B. in High Polymers, Vol XVI, "Polyurethanes, Chemistry and Technology", verfaßt von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z.B. auf den Seiten 45 bis 71, beschrieben.

Die Mitverwendung von im Sinne der Isocyanat-Polyadditionsreaktion tri- oder höherfunktionellen Verbindungen mit gegenüber Isocyanatgruppen reaktionsfähigen Gruppen in geringen Anteilen zur Erzielung eines gewissen Verzweigungsgrades ist ebenso möglich wie die bereits erwähnte mögliche Mitverwendung von tri- oder höherfunktionellen Polyisocyanaten zum gleichen Zweck. Auch einwertige Alkohole wie z.B. n-Butanol oder n-Dodecanol und Stearylalkohol können in geringen Mengen mitverwendet werden.

Beim erfindungsgemäßen Verfahren erfolgt der Einbau der Ammoniumgruppen unter Mitverwendung von tert. Aminogruppen aufweisenden Aufbaukomponenten c) unter anschließender Überführung der tert. Aminogruppen in die entsprechenden Ammoniumgruppen durch Neutralisation mit anorganischen oder organischen Säuren wie z.B. Salzsäure, Essigsäure, Fumarsäure, Maleinsäure, Milchsäure, Weinsäure, Oxalsäure oder Phosphorsäure.

Die Menge der Aufbaukomponente c) und die Menge der zur Neutralisation eingesetzten Säure wird dabei so bemessen, daß in den Polyurethanen 2 bis 200, vorzugsweise 2 bis 100 und besonders bevorzugt 5 bis 50 Milliäquivalente pro 100 g Feststoff an Ammoniumgruppen vorliegen und außerdem, daß die Lösungen oder Dispersionen einen pH-Wert von 3 bis 6 aufweisen. Dies bedeutet, daß, insbesondere bei Verwendung von schwachen Säuren, oftmals ein Säureüberschuß, bezogen auf die tert. Stickstoffatome der Komponente c) zum Einsatz gelangt.

Neben den Ammoniumgruppen können in den Polyurethanen auch die über die Aufbaukomponente e) gegebenenfalls eingebauten hydrophilen Polyethersegmente vorliegen. Die Menge derartiger, end- oder seitenständig eingebauter Polyetherketten kann einem Gehalt der Polyurethane an Ethylenoxid-Einheiten in in die genannten Polyetherketten eingebauter Form von bis zu 25, vorzugsweise bis zu 10 Gew.-%, bezogen auf das Gesamtgewicht des Polyurethans, entsprechen. Die Gesamtmenge an Ammoniumgruppen und derartigen hydrophilen Polyetherketten muß jedenfalls so bemessen sein, daß die Löslichkeit bzw. Dispergierbarkeit der Polyurethane in Wasser gewährleistet ist. Vorzugsweise wird auf die Mitverwendung von Aufbaukomponenten e) ganz verzichtet und die erforderliche Hydrophilie durch Einbau einer entsprechenden Menge an Ammoniumgruppen sichergestellt.

Die Aufbaukomponenten d) werden bei der Durchführung des erfindungsgemäßen Verfahrens in einer solche Menge mitverwendet, daß in den resultierenden Polyurethanen mindestens 1,3 Gew.-%, vorzugsweise 1,3 bis 8 Gew.-% (berechnet als $SiO_3$, Molekulargewicht = 76) an eingebauten, in Form von Struktureinheiten der allgemeinen Formel

```
   OR'
   |
 -Si-OR"
   |
   OR"'
```

vorliegende $SiO_3$-Einheiten eingebaut sind. Diese eingebauten Struktureinheiten entsprechen selbstverständlich den Aufbaukomponenten d), wobei jedoch eine teilweise Hydrolyse der Alkoxysilangruppen durch das als Löse- bzw. Dispergiermittel verwendete Wasser unter Bildung von Hydroxysilangruppen nicht ausgeschlossen werden kann.

Die gegebenenfalls beim erfindungsgemäßen Verfahren mitzuverwendenden Aufbaukomponenten f) werden, falls überhaupt, in Mengen bis zu 10, vorzugsweise bis zu 5 Gew.-%, bezogen auf das Gewicht der Komponente b) mitverwendet.

Zur Durchführung des erfindungsgemäßen Verfahrens wird vorzugsweise so vorgegangen, daß zunächst aus den Ausgangskomponenten a), b), gegebenenfalls jetzt oder im Anschluß an die Prepolymerbildung c) und gegebenenfalls e) in der Schmelze oder in Gegenwart eines inerten Lösungsmittels wie z.B. Aceton oder N-Methylpyrrolidon ein freies Isocyanatgruppen aufweisendes Prepolymer hergestellt wird, wozu die genannten Ausgangsmaterialien unter Einhaltung eines NCO/OH-Äquivalentverhältnisses von 1,2:1 bis 2,5:1 vorzugsweise 1,2:1 bis 2:1 zur Umsetzung gebracht werden. Die Reaktionstemperatur liegt hierbei im allgemeinen bei 5 bis 160 ° C, vorzugsweise bei 50 bis 100 ° C.

Im Anschluß hieran werden die so erhaltenen NCO-Prepolymeren durch Umsetzung mit der Komponente d), gegebenenfalls c) und/oder gegebenenfalls f) in die hochmolekularen Produkte überführt.

Hierbei werden die Komponenten in einer solchen Menge eingesetzt, die einem Äquivalentverhältnis von Isocyanatgruppen des Prepolymeren zu gegenüber Isocyanatgruppen reaktionsfähigen Gruppen der Komponenten d), c) und f) von 0,8:1 bis 2,5:1, vorzugsweise 0,8:1 bis 2:1 entspricht. Die Kettenverlängerungsreaktion (Umsetzung mit der Komponente f)) kann nach mehreren unterschiedlichen Varianten durchgeführt werden. So ist es beispielsweise möglich, die Umsetzung der NCO-Prepolymeren mit der Komponente d) und gleichzeitig mit der Komponente f) in einem inerten Lösungsmittel wie z.B. Aceton oder N-Methylpyrrolidon durchzuführen und die so erhaltene organische Lösung mit dem Wasser, gegebenenfalls unter anschließender destillativer Entfernung des Lösungsmittels zu durchmischen. Gemäß einer weiteren Variante wäre es beispielsweise auch möglich, die NCO-Prepolymeren zunächst in einem Lösungsmittel der genannten Art mit einer, bezogen auf die Isocyanatgruppen, unterschüssigen Menge der Komponente d) zu einem NCO-Prepolymeren mit eingebauten Alkoxysilangruppen umzusetzen, und dieses anschließend mit blockierten Kettenverlängerungsmitteln der oben beispielhaft genannten Art zu vermischen und dieses Gemisch anschließend in Wasser zu dispergieren. Die Einführung der Ammoniumgruppen könnte bei der erstgenannten Variante beispielsweise durch Neutralisation der tert. Aminogruppen vor der Durchmischung mit dem Wasser oder durch Verwendung einer wäßrigen Lösung der als Neutralisationsmittel dienenden Säure erfolgen. Gemäß der zweiten Variante ist es beispielsweise möglich, die zur Neutralisation der tert. Aminogruppen erforderliche Säure dem Dispersionswasser zuzumischen. Eine weitere Variante des erfindungsgemäßen Verfahrens besteht in einer einstufigen Umsetzung der Komponente a), b), c), d), gegebenenfalls e) und f) in einem organischen Lösungsmittel der genannten Art bei ca. 20 bis 80 °C und Überführung des gelösten Polyurethans in eine wäßrige Dispersion, vorzugsweise unter Verwendung von wäßrigen Lösungen der erforderlichen Säure und gegebenenfalls anschließender destillativer Entfernung des Lösungsmittels.

Die Umsetzung der NCO-Prepolymeren mit den Komponenten d) und gegebenenfalls c) oder f), sowie die Dispergierung in Wasser erfolgt im allgemeinen innerhalb des Temperaturbereichs von 20 bis 100 °C, vorzugsweise 20 bis 80 °C.

Die Menge des Wassers wird im allgemeinen so bemessen, daß 10- bis 60-, vorzugsweise 20- bis 50-gew.-%ige Lösungen bzw. Dispersionen der Polyurethane resultieren.

Die Herstellung der erfindungsgemäßen Lösungen oder Dispersionen ist nicht auf das erfindungsgemäße Verfahren beschränkt, welches lediglich den bevorzugten Weg zu den erfindungsgemäßen Produkten darstellt. So wäre es beispielsweise auch möglich, die in den NCO-Prepolymeren vorliegenden tert. Aminogruppen zunächst durch Quaternierung zumindest teilweise in Ammoniumgruppen zu überführen oder anstelle von tertiäre Aminstickstoffatome aufweisenden Aufbaukomponenten c) analoge, bereits Ammoniumgruppen aufweisende Aufbaukomponenten bei der Herstellung der NCO-Prepolymeren einzusetzen. Auch in einem solchen Falle lägen letztendlich Polyurethane vor, die den obengemachten Angaben bezüglich ihres Gehalts an Ammoniumgruppen entsprechen. Der Begriff "Ammoniumgruppen" steht daher stellvertretend für ternäre Ammoniumgruppen, wie sie durch Neutralisation eines tertiären Amins mit einer Säure entstehen und für quaternäre Ammoniumgruppen, wie sie durch Alkylierung einer tertiären Aminogruppe erhalten werden.

Grundsätzlich ist es auch möglich, die erfindungsgemäßen wäßrigen Lösungen oder Dispersionen in Analogie zu dem sogenannten Schmelzdispergierverfahren gemäß US-PS 3 756 992 oder auch in Analogie zur Verfahrensweise der DE-OS 2 543 091 herzustellen.

Die erfindungsgemäßen Lösungen oder Dispersionen von Polyisocyanat-Polyadditions-Verbindungen können als solche unmittelbar zum Beschichten beliebiger organischer oder anorganischer Substrate eingesetzt werden.

Hierzu werden die Dispersionen direkt oder nach Verdünnung auf dem Substrat aufgetragen. Beim Eintrocknen der Lacke vernetzen die Alkoxy- bzw. Hydroxysilan-Gruppen über an sich bekannte Reaktionen

$$-\overset{|}{\underset{|}{Si}}-OR + H_2O \longrightarrow -\overset{|}{\underset{|}{Si}}-OH + HOR \qquad (1)$$

$$2\ -\overset{|}{\underset{|}{Si}}-OH \longrightarrow -\overset{|}{\underset{|}{Si}}-O-\overset{|}{\underset{|}{Si}}- + H_2O \qquad (2)$$

zu Siloxan-Gruppierungen. Wie bereits oben ausgeführt findet die Reaktion gemäß Gleichung (1) zumindest teilweise bereits in der erfindungsgemäßen Lösung bzw. Dispersion statt, jedoch ist die Lagerstabilität der erfindungsgemäßen Lösungen bzw. Dispersionen offensichtlich darauf zurückzuführen, daß in Gegenwart des überschüssigen Wassers die zur Vernetzung führende Reaktion (2) nicht oder nicht in nennenswertem Umfang abläuft.

Die Vernetzungsreaktion läuft im allgemeinen bereits bei Raumtemperatur in ausreichender Geschwindigkeit, d.h. innerhalb eines Zeitraums von weniger als 24 h ab. Um die Trocknung und Vernetzung der Filme zu beschleunigen, ist es auch möglich, die aufgetragenen Filme bei erhöhter Temperatur, d.h. zwischen 25 und 150 ° C, bevorzugt zwischen 80 und 130 ° C einzubrennen.

Es entstehen je nach verwendeten Ausgangsprodukten klare oder matte, harte, elastische, gegen Lösungsmittel extrem widerstandsfähige Beschichtungen.

Als Substrat für die erfindungsgemäße PUR-Dispersion können alle organischen und anorganischen Materialien verwendet werden, so z.B. Glas und Gläser, Glasplatten, Glasfasern, Glasflaschen, Holz oder holzähnliche Produkte, Metalle, Kunststoffe, Leder, Papier, Baumaterialien, Steine und Gesteine.

Ein weiterer Vorteil ist, daß diese erfindungsgemäßen Dispersionen auf metallischen Substraten durch Kataphorese abscheidbar sind. Bei der erfindungsgemäßen Verwendung können selbstverständlich die üblichen, aus der Lacktechnologie bekannten Hilfs- und Zusatzmittel mitverwendet werden. Weitere Hilfs- und Zusatzmittel sind z.B. Pigmente, viskositätsregulierende Stoffe, Antischaummittel, UV-Absorber, Antioxidantien oder sonstige den Polymerabbau verhindernde Substanzen wie z.B. sterisch gehinderte Amine, usw.

Die Applikation der Lacke erfolgt nach den üblichen Methoden der Lacktechnologie, beispielsweise durch Spritzen, Gießen, Tauchen oder Walzen. Die Lacke werden im allgemeinen in solchen Mengen aufgetragen, daß Trockenfilmstärken der Lacke zwischen 0,005 und 0,10 mm resultieren.

In den nachfolgenden Beispielen beziehen sich alle Prozentangaben auf Gewichtsprozente.

## Beispiele

Allgemeine Vorschrift zur Herstellung der kationischen PUR-Dispersionen

a) Herstellung des Prepolymeren

In einen trockenen Dreihalskolben werden die höhermolekulare Polyhydroxylverbindung b) und gegebenenfalls die hydrophile Polyetherkomponente e) vorgelegt und bei 120 ° C 1 h im Vakuum entwässert. Anschließend wird in die auf 80 ° C abgekühlte Schmelze unter Stickstoff die Polyisocyanatkomponente a) gegeben.

Die Mischung wird bei 80 ° C gerührt, bis der theoretisch berechnete Isocyanatgehalt mit dem titrimetrisch bestimmten übereinstimmt.

Anschließend wird mit trockenem Aceton auf ca. 50 % Feststoffkonzentration verdünnt und mit 0,5 %, bezogen auf Polymer, mit Benzoylchlorid stabilisiert.

b) Kettenverlängerung und Dispergierung

Die Organosilane d) und die kationisch dispergierend wirkende Gruppen enthaltenen Verbindungen c) werden in einer ca. 20 bis 50 %igen Lösung in Aceton vorgelegt, und das in a) beschriebene Prepolymer bei einer Temperatur <40 ° C zugetropft.

Die Mischung wird anschließend bei Raumtemperatur oder bei erhöhter Temperatur bis zu ca. 70 ° C gerührt, bis IR-spektrometrisch kein Isocyanat mehr nachweisbar ist. Anschließend wird mit Säure neutralisiert und das Wasser zugegeben. Im Wasserstrahlvakuum wird das Aceton entfernt.

Man erhält eine stabile, feinteilige, wäßrige Dispersion, die unter diesen Bedingungen lagerstabil ist.

Tabelle

| Beispiel | Isocyanat a) | [g] | Makrodiol b) | [g] | Disp. wirkende Verbindung c) | [g] | Organosilan d) | [g] | Polyether e) [g] |
|---|---|---|---|---|---|---|---|---|---|
| 1 | 1 | 444 | 1 | 1700 | 1 | 72,5 | 1 | 221 | - |
| 2 | 1 | 444 | 1 | 1700 | 1 | 108,8 | 1 | 110,5 | - |
| 3 | 1 | 555 | 1 | 1700 | 1 | 145 | 1 | 221 | - |
| 4 | 1 | 444 | 1 | 1700 | 1 | 72,5 | 2 | 222 | - |
| 5 | 1 | 444 | 1 | 1700 | 1 | 72,5 | 2 | 111 | - |
| 6 | 1 | 444 | 2 | 2250 | 1 | 72,5 | 1 | 221 | - |
| 7 | 1 | 444 | 2 | 2250 | 1 | 108,8 | 1 | 110,5 | - |
| 8 | 1 | 444 | 2 | 2250 | 1 | 72,5 | 2 | 222 | - |
| 9 | 1 | 444 | 2 | 2250 | 2 | 89,2 | 1 | 110,5 | - |
| 10 | 2 | 500 | 2 | 2250 | 1 | 116 | 1 | 144 | 200 |
| 11 | 2 | 500 | 2 | 2250 | 2 | 95,2 | 1 | 144 | 200 |
| 12 | 1 | 331 | 3 | 432 | 1 | 72,5 | 1 | 221 | - |
| 13 | 1 | 369 | 3 | 511 | 1 | 72,5 | 1 | 221 | - |
| 14 | 1 | 369 | 3 | 511 | 1 | 72,5 | 1 | 221 | 100 |
| 15 | 1 | 369 | 3 | 511 | 1 | 72,5 | 1 | 159 | 100 |
| 16* | 1 | 369 | 3 | 511 | 1 | 72,5 | 1 | 221 | - |
| 17* | 1 | 369 | 3 | 511 | 1 | 72,5 | 1 | 221 | - |
| 18* | 1 | 369 | 3 | 511 | 1 | 72,5 | 1 | 221 | - |
| 19 | 1 | 369 | 3 | 511 | 1 | 72,5 | 1 | 221 | - |
| 20* | 1 | 369 | 3 | 511 | 1 | 72,5 | 1 | 221 | - |
| 21* | 1 | 444 | 1 | 1700 | 4 | 95 | 1 | 221 | - |
| 22* | 1 | 444 | 1 | 1700 | 5 | 67 | 1 | 221 | - |

*) Vergleichsbeispiele

<u>Tabelle</u> (Fortsetzung)

| Beispiel | Säure | [g] | Wasser [g] | Konzentration [%] | Gehalt an $SiO_3$ [%] | pH-Wert |
|---|---|---|---|---|---|---|
| 1 | 1 | 90 | 7630 | 24 | 3,12 | 3,25 |
| 2 | 1 | 300 | 5777 | 28 | 1,61 | 3,80 |
| 3 | 1 | 300 | 8475 | 23 | 2,90 | 4,00 |
| 4 | 1 | 300 | 6405 | 29 | 3,12 | 4,07 |
| 5 | 1 | 300 | 5685 | 28 | 1,63 | 3,67 |
| 6 | 1 | 300 | 6050 | 32 | 2,54 | 3,80 |
| 7 | 1 | 300 | 4879 | 36 | 1,30 | 4,00 |
| 8 | 1 | 300 | 10295 | 22 | 2,54 | 4,60 |
| 9 | 1 | 300 | 6140 | 31 | 1,31 | 3,64 |
| 10 | 1 | 200 | 3141 | 49 | 1,54 | 3,75 |
| 11 | 1 | 300 | 2833 | 50 | 1,66 | 3,78 |
| 12 | 1 | 333 | 4480 | 18 | 7,19 | 3,47 |
| 13 | 1 | 300 | 4700 | 19 | 6,47 | 3,77 |
| 14 | 1 | 100 | 2164 | 36 | 5,97 | 3,70 |
| 15 | 1 | 100 | 2810 | 30 | 4,38 | 4,48 |
| 16* | 2 | 210 | 4485 | 20 | 6,47 | 1,1 |
| 17* | 1 | 30 | 4385 | 21 | 6,47 | 7,1 |
| 18* | 1 | 25 | 4670 | 20 | 6,47 | 7,5 |
| 19 | 3 | 450 | 4895 | 18 | 6,47 | 3,00 |
| 20* | 4 | 100 | 4903 | 19 | 6,47 | 1,5 |
| 21* | - | - | 9840 | 20 | 3,09 | 10,8 |
| 22* | - | - | 9150 | 21 | 3,13 | 8,9 |

<u>Bezeichnung der Polyisocyanate a)</u>

Nr. 1

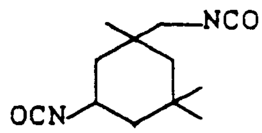

Nr. 2

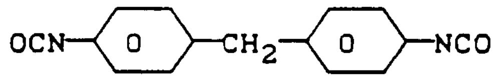

Bezeichnung der Polyhydroxylverbindungen b)

| | |
|---|---|
| Nr. 1 | Polyester aus Adipinsäure, Hexandiol, Neopentylglykol OH-Zahl = 64-68 |
| Nr. 2 | Polyester aus Adipinsäure, Butandiol OH-Zahl = 48-52 |
| Nr. 3 | Polyacrylat mit einer OH-Zahl von 140-150. |

Bezeichnung der (potentiell) ionischen Aufbaukomponenten c)

Nr. 1

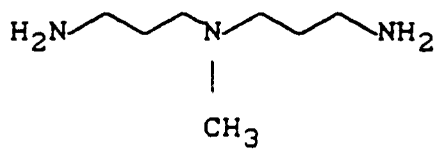

Nr. 2

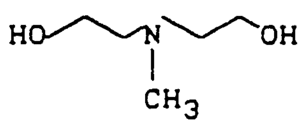

Nr. 3

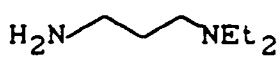

Nr. 4

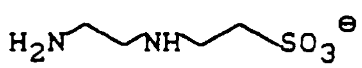

$Na^{\oplus}$ (Vergleich)

Nr. 5

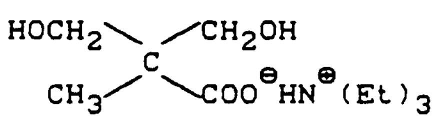

(Vergleich)

Bezeichnung der Organosilane d)

Nr. 1

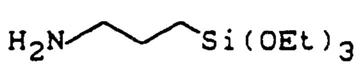

Nr. 2

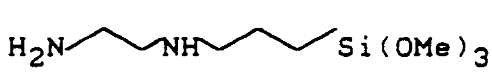

Bezeichnung des hydrophilen Polyetheralkohols e)

ein auf Butanol gestarteter Polyether hergestellt
mit einem Gemisch aus
63,5 Mol-% Ethylenoxid- und
36,5 Mol-% Propylenoxid-Einheiten.
OH-Zahl = ca. 25

Bezeichnung der Säuren

Nr. 1 Essigsäure
Nr. 2 Phosphorsäuredibutylester
Nr. 3 Milchsäure
Nr. 4 1 M Salzsäure

Bei den Beispielen 16, 17, 18, 20, 21 und 22 handelt es sich um Vergleichsbeispiele, wie aus dem außerhalb des erfindungsgemäßen Bereichs liegenden pH-Wert ersichtlich. Die Dispersionen gemäß Beispielen 21 und 22 sind anionisch modifiziert und auch aus diesem Grund nicht erfindungsgemäß. Alle Dispersionen gemäß Vergleichsbeispielen weisen eine völlig unzureichende Lagerstabilität bei Raumtemperatur von weniger als 1 Tag auf. Demgegenüber handelt es sich bei den Dispersionen gemäß erfindungsgemäßen Ausführungsbeispielen um lagerstabile Produkte, die zu hochwertigen, vernetzten Überzügen auftrocknen.

Beispiel 23 (Verwendung)

Die Dispersion nach Beispiel 13 wird auf eine Glasplatte aufgestrichen und 24 h bei Raumtemperatur trocknen gelassen. Es entsteht ein harter aber elastischer und kratzfester Film mit sehr guter Beständigkeit gegenüber Wasser, verdünnter Essigsäure, Aceton, Toluol und Ethanol. Durch Einbrennen bei 120 °C kann die Trocknungszeit auf 30 Minuten verkürzt werden. Der so erhaltene Film weist die gleichen vorteilhaften Eigenschaften auf.

**Patentansprüche**

1. Lagerstabile, zu vernetzten Flächengebilden trocknende wäßrige Lösungen oder Dispersionen von kationisch modifizierten Polyurethanen, dadurch gekennzeichnet, daß die gelöst oder dispergiert vorliegenden Polyurethane
   (i) einen Gehalt an eingebauten Ammoniumgruppen von 2 bis 200 Milliäquivalenten pro 100 g Feststoff,
   (ii) einen Gehalt an, innerhalb von end- oder seitenständig angeordneten Polyetherketten vorliegenden Ethylenoxideinheiten von 0 bis 25 Gew.-%,
   (iii) einen Gehalt an eingebauten Struktureinheiten der Formel

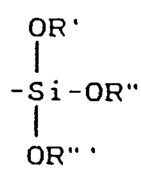

   berechnet als $SiO_3$ (Molekulargewicht = 76) von 1,3 bis 8 Gew.-%
   aufweisen, wobei in der allgemeinen Formel R', R'' und R''' für gleiche oder verschiedene Reste stehen und Wasserstoff oder Alkylgruppen mit 1 bis 4 Kohlenstoffatomen bedeuten, und wobei die hydrophilen Struktureinheiten (i) und (ii) insgesamt in einer, die Löslichkeit oder Dispergierbarkeit der Polyurethane in Wasser gewährleistenden Menge vorliegen, und die Lösungen oder Dispersionen einen pH-Wert von 3 bis 6 aufweisen.

2. Verfahren zur Herstellung von wäßrigen Lösungen oder Dispersionen gemäß Anspruch 1 durch Umsetzung von
   a) organischen Polyisocyanaten mit

b) organischen Polyhydroxylverbindungen des Molekulargewichtsbereichs 400 bis 6000,
c) tertiäre Aminstickstoffatome aufweisenden Verbindungen mit mindestens einer gegenüber Isocyanatgruppen reaktionsfähigen Gruppe,
d) organischen Verbindungen der allgemeinen Formel

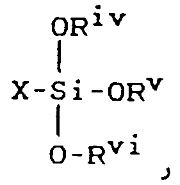

in welcher

X für einen organischen Rest steht, der mindestens eine gegenüber Isocyanatgruppen reaktionsfähige Gruppe trägt und

$R^{iv}$, $R^{v}$ und $R^{vi}$ für gleiche oder verschiedene Alkylreste mit 1 bis 4 Kohlenstoffatomen stehen,

gegebenenfalls

e) im Sinne der Isocyanat-Additionsreaktion ein- oder difunktionellen Verbindungen, die eine hydrophile Polyetherkette aufweisen, deren Kettenglieder zumindest zu 40 Mol-% aus Ethylenoxid-Einheiten und zum Rest aus Propylenoxid-Einheiten bestehen,

und gegebenenfalls bis zu 10 Gew.-%, bezogen auf b),

f) alkoholischen, aminischen und/oder hydrazinischen Kettenverlängerungsmitteln des Molekulargewichtsbereichs 32 bis 399,

wobei die Umsetzung der Komponente a) mit den Komponenten b) bis f) im Sinne eines Einstufen-Verfahrens, gegebenenfalls unter Zuhilfenahme eines inerten, mit Wasser mischbaren Lösungsmittels unter anschließender Überführung des gelöst vorliegenden Polyurethans in eine wäßrige Lösung oder Dispersion erfolgt, oder wobei zunächst aus einer überschüssigen Menge der Komponente a) und den in beliebiger Reihenfolge oder im Gemisch eingesetzten Komponenten b), c), d) und gegebenenfalls e) unter Einhaltung eines NCO/OH-Äquivalentverhältnisses von 1.2:1 bis 2.5:1 gegebenenfalls unter Zuhilfenahme eines inerten, mit Wasser mischbaren Lösungsmittels ein NCO-Prepolymer hergestellt wird, welches anschließend durch Vermischen mit, gegebenenfalls aminische oder hydrazinische Kettenverlängerungsmittel f) enthaltendem Wasser unter gleichzeitiger Kettenverlängerung in eine wäßrige Lösung oder Dispersion überführt wird,

wobei das Äquivalentverhältnis von Isocyanatgruppen des Prepolymeren zu gegenüber Isocyanatgruppen reaktionsfähigen Gruppen der Komponenten d), c) und f) 0.8:1 bis 25:1 beträgt,

dadurch gekennzeichnet, daß man die eingebauten tertiären Stickstoffatome spätestens während des Lösens oder Dispergierens in Wasser mittels einer Säure neutralisiert, wobei die Menge der gegebenenfalls im Überschuß eingesetzten Säure so bemessen wird, daß die resultierende Lösung oder Dispersion einen pH-Wert von 3 bis 6 aufweist, und im übrigen Art und Mengenverhältnisse der Ausgangskomponenten so wählt, daß die gelöst oder dispergiert vorliegenden Polyurethane den Merkmalen (i) bis (iii) des Anspruchs 1 entsprechen.

**3.** Verfahren gemäß Anspruch 2, dadurch gekennzeichnet, daß man die Umsetzung der Ausgangsmaterialien zumindest teilweise in Gegenwart eines organischen, mit Wasser mischbaren Lösungsmittel durchführt und dieses nach der Herstellung der wäßrigen Lösung oder Dispersion destillativ aus dieser entfernt.

**4.** Verwendung der wäßrigen Lösungen oder Dispersionen gemäß Anspruch 1 als Beschichtungsmittel oder zur Herstellung von Beschichtungsmitteln für beliebige Substrate.

## Claims

**1.** Storage-stable aqueous solutions or dispersions, which dry to give crosslinked sheet-like structures, of cationically modified polyurethanes, characterised in that the polyurethanes present in dissolved or dispersed form have

(i) a content of incorporated ammonium groups of 2 to 200 milliequivalents per 100 g of solid,
(ii) a content of ethylene oxide units, present within polyether chains located in terminal or lateral

positions, of 0 to 25 % by weight, and

(iii) a content of incorporated structural units of the formula

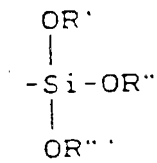

calculated as $SiO_3$ (molecular weight = 76) of 1.3 to 8 % by weight,

wherein, in the general formula, R', R'' and R''' represent identical or different radicals and denote hydrogen or alkyl groups having 1 to 4 carbon atoms, and wherein the hydrophilic structural units (i) and (ii) are present in a total amount which ensures the solubility or dispersibility of the polyurethanes in water, and the solutions or dispersions have a pH of 3 to 6.

**2.** Process for the preparation of aqueous solutions or dispersions according to Claim 1, by reaction of

a) organic polyisocyanates with

b) organic polyhydroxy compounds of the molecular weight range from 400 to 6000,

c) compounds which contain tertiary amine nitrogen atoms and have at least one group which is reactive towards isocyanate groups,

d) organic compounds of the general formula

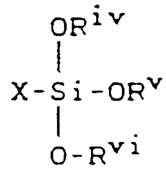

in which

| | |
|---|---|
| X | represents an organic radical which carries at least one group which is reactive towards isocyanate groups and |
| $R^{iv}$, $R^{v}$ and $R^{vi}$ | represent identical or different alkyl radicals having 1 to 4 carbon atoms, |

if appropriate

e) compounds which are mono- or difunctional in the sense of the isocyanate addition reaction and have a hydrophilic polyether chain, the chain members of which consist of ethylene oxide units to the extent of at least 40 mol % and of propylene oxide units as the remainder,

and if appropriate up to 10 % by weight, based on b),

f) of alcoholic, aminic and/or hydrazinic chain-lengthening agents of the molecular weight range from 32 to 399,

wherein the reaction of component a) with components b) to f) takes place in the sense of a one-stage process, if appropriate with the aid of an inert water-miscible solvent, the polyurethane present in dissolved form subsequently being converted into an aqueous solution or dispersion, or wherein an NCO prepolymer is first prepared from an excess amount of component a) and components b), c), d) and if appropriate e), which are employed in any desired sequence or as a mixture, an NCO/OH equivalent ratio of 1.2:1 to 2.5:1 being maintained, and if appropriate with the aid of an inert water-miscible solvent, and the prepolymer is then converted into an aqueous solution or dispersion by mixing with water which optionally contains aminic or hydrazinic chain-lengthening agents f), chain lengthening simultaneously taking place,

the equivalent ratio of isocyanate groups of the prepolymer to groups of components d), c) and f) which are reactive towards isocyanate groups being 0.8:1 to 25:1, characterised in that the incorporated tertiary nitrogen atoms are neutralised by means of an acid at the latest during the dissolving or dispersing in water, the amount of acid, which is employed in excess if appropriate, being chosen such that the resulting solution or dispersion has a pH of 3 to 6, and moreover the nature and ratios of the amounts of the starting components being chosen such that the polyurethanes present in dissolved or dispersed form correspond to features (i) to (iii) of Claim 1.

**3.** Process according to Claim 2, characterised in that the reaction of the starting materials is carried out at least partly in the presence of an organic water-miscible solvent, and this is removed from the aqueous solution or dispersion by distillation after preparation thereof.

**4.** Use of the aqueous solutions or dispersions according to Claim 1 as coating agents or for the production of coating agents for any desired substrates.

**Revendications**

**1.** Solutions ou dispersions aqueuses de polyuréthannes modifiés dans le sens cationique, stables à l'entreposage, séchant en formant des produits plats réticulés, caractérisées en ce que les polyuréthannes présents sous forme dissoute ou dispersée possèdent

(i) une teneur en groupes ammonium incorporés de 2 à 200 milliéquivalents par 100 g de substance solide,

(ii) une teneur de 0 à 25% en poids d'unités oxyde d'éthylène présentes dans des chaînes polyéther placées en bout de chaîne ou en position latérale,

(iii) une teneur de 1,3 à 8% en poids d'unités structurelles incorporées de formule

$$\begin{array}{c} OR' \\ | \\ -Si-OR'' \\ | \\ OR''' \end{array}$$

calculée comme $SiO_3$ (poids moléculaire = 76), R', R'' et R''' représentant des restes identiques ou différents et signifiant l'hydrogène ou des groupes alkyle avec 1 à 4 atomes de carbone, et les unités structurelles hydrophiles (i) et (ii) ensemble étant présentes à raison d'une quantité garantissant la solubilité ou l'aptitude à la dispersion des polyuréthannes dans l'eau, et les solutions ou les dispersions présentant un pH de 3 à 6.

**2.** Procédé pour fabriquer des solutions ou des dispersions aqueuses selon la revendication 1, en faisant réagir

a) des polyisocyanates organiques avec

b) des composés polyhydroxylés organiques de poids moléculaires de l'ordre de 400 à 6.000,

c) des composés présentant des atomes d'azote amino tertiaires, avec au moins un groupe réactif vis-à-vis des groupes isocyanates,

d) des composés organiques de formule générale

$$\begin{array}{c} OR^{iv} \\ | \\ X-Si-OR^{v} \\ | \\ O-R^{vi}, \end{array}$$

dans laquelle

| | |
|---|---|
| X | représente un groupe organique portant au moins un groupe réactif vis-à-vis des groupes isocyanate, et |
| $R^{iv}$, $R^{v}$ et $R^{vi}$ | représentent des restes alkyle |

identiques ou différents avec 1 à 4 atomes de carbone, eventuellement

e) des composés mono- ou bifonctionnels dans le sens de la réaction d'addition des isocyanates, présentant une chaîne polyéther hydrophile dont les chaînons se composent d'au moins 40 mol-% d'unités oxyde d'éthylène, le reste étant composé d'unités oxyde de propylène,

et éventuellement jusqu'à 10% en poids par rapport à b),

f) d'agents d'allongement de chaîne alcooliques, aminiques et/ou hydraziniques d'une gamme de poids moléculaires de 32 à 399,

procédé dans lequel la réaction des composants a) avec les composants b) à f) se déroule dans le sens d'un procédé à une étape, éventuellement à l'aide d'un solvant inerte miscible avec l'eau avec transformation subséquente du polyuréthanne présent sous forme dissoute en une solution ou une

dispersion aqueuse, ou dans lequel on fabrique d'abord, à partir d'une quantité excédentaire de composant a) et des composants b), c), d) et éventuellement f) ajoutés dans un ordre quelconque ou en mélange, en respectant un rapport des équivalents NCO/OH de 1,2:1 à 2,5:1, éventuellement en ajoutant un solvant inerte miscible avec l'eau, un prépolymère NCO que l'on transforme ensuite en une solution ou une dispersion aqueuse par mélange avec de l'eau contenant éventuellement des agents d'allongement de chaîne aminiques ou hydraziniques f) et allongement de chaîne simultané, le rapport des équivalents des groupes isocyanate du prépolymère et des groupes réactifs vis-à-vis des isocyanates, contenus dans les composants d), c) et f), étant de 0,8:1 à 25:1,
caractérisé en ce que l'on neutralise les atomes d'azote tertiaires incorporés au moyen d'un acide, au plus tard durant la dissolution ou la dispersion dans l'eau, la quantité d'acide éventuellement ajoutée en excès étant choisie telle que la solution ou la dispersion résultante présente un pH de 3 à 6, et que l'on choisit, d'autre part, le genre et les rapports de mélange des substances de départ de manière telle que les polyuréthannes dissous ou dispersés répondent aux caractéristiques (i) à (iii) de la revendication 1.

**3.** Procédé selon la revendication 2, caractérisé en ce que l'on effectue la réaction des substances de départ, au moins partiellement, en présence d'un solvant organique miscible avec l'eau et qu'on élimine ce solvant par distillation après la fabrication de la solution ou de la dispersion aqueuse.

**4.** Utilisation des solutions ou des dispersions aqueuses selon la revendication 1 comme produits de revêtement ou pour la fabrication de produits de revêtement pour des substrats quelconques.